# EUROPÄISCHE PATENTANMELDUNG

(11) **EP 1 685 938 A2**
(43) Veröffentlichungstag der Anmeldung: **02.08.2006**
(21) Anmeldenummer: 05018344.1
(22) Anmeldetag: 24.08.2005
(51) Int. Cl.: B29C 44/46

(54) **Verfahren zur Herstellung von Sandwichelementen aus Reaktivkunststoff**

(30) Priorität: 01.09.2004 DE 102004042270
(71) Anmelder: Hennecke GmbH, 51379 Leverkusen (DE)
(72) Erfinder: Knapp, Ulrich, 51375 Leverkusen (DE); Wirth, Jürgen, 51147 Köln (DE)
(74) Vertreter: Weismantel, Lothar

(57) **Zusammenfassung**

Die Erfindung betrifft ein Verfahren zur Herstellung von Sandwichelementen (1) (sogenannten Panels) bei dem das aufsteigende Reaktivgemisch durch zwischen der oberen (3) und unteren (2) Deckschicht angeordnete Leitelemente (12,13,14) beim Aufsteigen geführt und dadurch lunkerfreie Panels mit regelmäßiger Zellstruktur hergestellt werden können. Die Erfindung betrifft auch eine Vorrichtung zu deren Herstellung.

## Beschreibung

Die Erfindung betrifft ein Verfahren zur Herstellung von Sandwichelementen (sogenannten Panels) bei dem das aufsteigende Reaktivgemisch durch zwischen der oberen und unteren Deckschicht angeordnete Leitelemente beim Aufsteigen geführt und dadurch lunkerfreie Panels mit regelmäßiger Zellstruktur hergestellt werden können. Die Erfindung betrifft auch eine Vorrichtung zu deren Herstellung.

Die Herstellung von Sandwichelementen (Panels) aus Reaktivkunststoff erfolgt im Allgemeinen in einem kontinuierlichen Prozess. Dabei werden die Panels endlos auf sogenannten Contimaten in Dicken von in der Regel ca. 10 bis 200 mm hergestellt. Ein solcher Contimat besteht dabei üblicherweise aus einem umlaufenden Oberband zur Führung der oberen Deckschicht, einem umlaufenden Unterband zur Führung der unteren Deckschicht, einer Zuführeinrichtung für die obere Deckschicht, einer Zuführeinrichtung für die untere Deckschicht, einer Formstrecke, innerhalb derer das Reaktivgemisch, z.B. ein Polyurethan-Reaktionsgemisch oder Polyisocyanurat-Reaktionsgemisch zwischen der oberen Deckschicht und der unteren Deckschicht aufschäumt und ausreagiert, einer Ablängeinrichtung für das hergestellte Panel sowie einer Dosierstation mit einem Mischkopf zum Auftragen der Polyurethan-Reaktionsmischung auf die untere Deckschicht. Ein Contimat nach dem Stand der Technik ist in Figur 1 dargestellt.

Dabei wird das flüssige Reaktivgemisch auf das Unterband bzw. auf die untere Deckschicht aufgetragen. Das geschieht mittels eines quer zur Transportrichtung traversierenden Mischkopfs. Da das so aufgetragene Gemisch nicht völlig eben ist, bildet dementsprechend auch das durch die anschließende Treibgasentwicklung aufsteigende Reaktivgemisch eine ungleichmäßige und unebene (höckerige) Oberfläche aus. Gelangt dann dieses Reaktivgemisch mit der unebenen (höckerigen) Oberfläche an das Oberband bzw. an die obere Deckschicht, so wird zwischen den Unebenheiten oder Höckern Luft eingeschlossen. Es entstehen somit Panels mit Lunkern. Solche Panels sind für den Einsatz in technischen Anwendungen nicht geeignet, da sie deutlich erkennbare Lunker aufweisen, und weil sich solche Panels auf Grund der Lunker erheblich verziehen und damit krumm werden.

Panels mit Lunkern auf der Oberseite entstehen vor allem dann, wenn die Produktion, wie die Praktiker sagen, zu schnell, das heißt mit einer für die momentan dosierte Menge an Reaktivgemisch zu hohen Transportgeschwindigkeit der Deckschichten, gefahren wird. Eine solche Betriebsweise entspricht der Steigkurve a des Reaktivgemisches wie in Figur 2 dargestellt.

In der Praxis ist nun gefunden worden, dass sich durch eine geringere Produktionsgeschwindigkeit, das heißt durch eine für die gleiche dosierte Menge an Reaktivgemisch geringere Transportgeschwindigkeit der Deckschichten, Oberflächenlunker vermeiden lassen, wobei dann die Schäumfront zwischen den Deckschichten eine so genannte Bugwelle aufweist. Eine solche Betriebsweise entspricht den Steigkurven b und c in Figur 2. Diese so genannte Bugwelle zeichnet sich dabei dadurch aus, dass die zwischen den Deckschichten aufsteigende Schäumfront über die Höhe des Reaktivgemisches eine in Transportrichtung der Deckschichten ausgeformte Vertiefung oder Mulde aufweist. Bei einer solchen Betriebsweise tritt die ungleichmäßige Oberfläche des aufsteigenden Reaktivgemisches nicht mehr auf.

Die in Figur 2 beispielhaft gezeigte Steigkurve b entspricht einer Betriebsweise mit einer relativ zu langsam gefahrenen Produktionsgeschwindigkeit. Zwar wird hierbei das Auftreten von Lunkern vermieden, jedoch entstehen dafür im Panel erhebliche Überwälzungen.

In diesem Zusammenhang sei nun auf folgende wesentliche physikalische Daten verwiesen, welche die Qualität eines Panels bestimmen: die Druckfestigkeit und die Isolierwirkung.

Bei der Treibgasentwicklung im Reaktivkunststoff entstehen Zellen, die sich entsprechend der Steigrichtung länglich, d.h. im Wesentlichen oval ausbilden. Angestrebt sind nun Panels mit einer homogenen Zellstruktur, bei denen die Zellen vertikal, d.h. im Wesentlichen senkrecht zu den Paneldeckschichten ausgerichtet sind. Denn die Belastbarkeit von Zellen in Längsrichtung, d.h. parallel zu ihren langen Seiten ist deutlich höher als quer dazu. Somit haben Panels, bei denen die im Wesentlichen ovalen Zellen senkrecht zu den Deckschichten ausgebildet sind die besten Druckfestigkeitswerte. Dabei liegt die Zellenzahl üblicherweise im Bereich von ca. 10 bis ca. 100 Zellen pro cm, das heißt die. Höhe einer vertikal ausgerichteten Zelle liegt üblicherweise in der Größenordnung von ca. 0,1 bis 1 mm.

Entsprechendes gilt für die Isolierwirkung: Denn je geringer der Wärmeleitquerschnitt und je länger die Wärmeleitstrecken der Zellmembranen in der Kunststoffmatrix sind, umso besser ist die Isolierung. Das heißt auch, dass eine Zellstruktur mit im Wesentlichen vertikal zu den Deckschichten ausgerichteten Zellen das Optimum bildet. Das wiederum heißt, dass Überwälzungen, wie sie bei einer Fahrweise entsprechend der in Figur 2 dargestellten Steigkurve b auftreten, zu einer Zellstruktur mit völlig chaotisch liegenden Zellen führt, d.h. zu Zellen, die zu einem großen Teil nicht senkrecht zu den Deckschichten liegen. Das wiederum bedeutet, dass solche Panels eine zu geringe Isolierwirkung und auch eine zu geringe Druckfestigkeit speziell auf der Oberseite des Panels haben.

Der Praxiskompromiss besteht daher bisher darin, eine Produktionsgeschwindigkeit zu fahren, das heißt eine Transportgeschwindigkeit der Deckschichten einzustellen, die zu einer der Steigkurve c in Figur 2 ähnelnden Steigkurve führt. Hierbei ist einerseits die Lunkergröße und die Lunkerhäufigkeit minimiert, andererseits auch die Dicke der Überwälzungsschicht, d.h. die Dicke der Panelrandschicht, in der die Zellen chaotisch liegen, ist nicht sehr stark ausgeprägt.

Ein solcher Kompromiss ist bei langsam reagierenden Kunststoffen wie z.B. bei manchen Polyurethan-Schäumen (PUR-Schäumen), bei denen das Aufsteigen des Schaums relativ langsam erfolgt, technisch noch sinnvoll möglich. Jedoch sind bei den so hergestellten PUR-Schäumen die Druckfestigkeiten und Isolierwirkungen noch immer nicht voll befriedigend.

Bei hoch reaktiven Kunststoffen wie z.B. bei Polyisocyanurat-Schäumen (PIR-Schäumen) ist dieser Kompromiss jedoch nicht mehr technisch sinnvoll realisierbar. Denn hierbei ergibt sich auf Grund des extrem schnellen Aufsteigens des PIR-Schaums quasi automatisch eine der Steigkurve b in Figur 2 ähnelnde Steigkurve. Ein Prozessfenster für eine Produktion analog der Steigkurve c in Figur 2 ist in der Praxis nicht möglich, da ohnehin eine der Steigkurve a in Figur 2 entsprechende Fahrweise auf Grund der Bildung von Lunkern prinzipiell vermieden werden muss.

Man muss sich daher bisher bei PIR-Schäumen mit Druckfestigkeiten und Isolationswerten zufrieden geben, die nicht dem Optimum dieses Werkstoffs entsprechen.

EP-A-689 920 beschreibt ein Verfahren und eine Vorrichtung, mit denen rechteckige Schaumstoffblöcke oder Schaumstoffbahnen aus einem flüssigen Schaum bzw. aus schäumbarem Reaktionsgemisch hergestellt werden können. In diesem Dokument wird das Problem behandelt, einerseits das schäumbare Gemisch gleichmäßig über der Breite des Transportbandes zu verteilen und andererseits zu verhindern, dass es beim Aufbringen der oberen Kaschierfolie zu Lufteinschlüssen kommt.

In EP-A-689 920 wird gelehrt, ein Umlenkelement, d.h. im Prinzip eine Kalibrierplatte zu verwenden, mit der die Gemischverteilung erfolgt, und weiterhin dieses Umlenkelement in Transportrichtung so zu positionieren, dass das Aufsteigen des Schaums erst im Anschluss an den Austritt der schäumbaren Mischung aus dem Kanal zwischen Umlenkelement und Unterband erfolgt. Das heißt auch, dass selbst wenn ein flüssiger Schaum (Froth) als Reaktivgemisch verwendet wird, der eigentliche Steigprozess aus der chemischen Reaktion erst hinter dem Umlenkelement beginnt.

Dieses Verfahren und diese Vorrichtung sind für Blockschaum sehr gut verwendbar. Hier werden nämlich Blockhöhen von 1 bis 2 m erzeugt.

Bei der Panelherstellung nach dem Verfahren der EP-A-689 920 zeigen sich jedoch erhebliche Mängel. Panels haben nämlich nur eine Dicke von 0,01 bis maximal 0,2 m, so dass sich völlig andere Produktions-Verhältnisse ergeben.

Bei der Verwendung von ungefrothtem Reaktivgemisch muss die Distanz zwischen Umlenkelement (z.B. Kalibrierplatte) und Unterband in einer Größenordnung von ca. 0,3 bis 8 mm liegen. Das ist speziell für dünne Panels nur mit extrem hohem technischem Aufwand realisierbar; denn die Distanz von beispielsweise 0,3 mm muss über der gesamten Fläche des Umlenkelements exakt eingehalten werden. Ansonsten kommt es zu großen Dichteunterschieden im Panel, was wiederum zu Verzug und damit zu Ausschuss führt.

Bei Verwendung von gefrothtem Reaktivgemisch ist dieses Problem weniger gravierend, da hierbei die Distanz zwischen Umlenkelement und Unterband entsprechend dem Frothanteil größer ist.

Allerdings tritt hierbei ein anderes gravierendes Problem auf. Denn beim Durchströmen des vorgefrothten Reaktivgemischs durch den Kalibrierkanal werden durch die Reibung Zellen im Froth zerstört, die dann kollabieren und zu Gasnestern fiihren. Somit werden hierbei zwar Lufteinschlüsse vermieden, dafür aber neue Gasnester produziert.

Darüber hinaus offenbart EP-A-689 920 nicht, dass in Panels die Zellen vertikal zu den Deckschichten angeordnet sein müssen, um optimale Druckfestigkeit und optimale Isolierwirkung zu erzielen und wie dies zu erreichen ist.

Es bestand also nach wie vor die Aufgabe, ein einfaches Verfahren und eine einfache Vorrichtung zur Verfügung zu stellen, mit dem lunker- und verzugsfreie Panels aus zelligen Reaktivkunststoffen mit hoher Druckfestigkeit und hoher Isolierwirkung hergestellt werden können, das heißt Panels mit einer Zellstruktur, in welcher die Zellen im Wesentlichen länglich geformt und im Wesentlichen senkrecht zu den Deckschichten ausgerichtet sind.

Diese Aufgabe stellt sich für PUR-Schäume (Polyurethan-Schäume), insbesondere aber für PIR-Schäume (Polyisocyanurat-Schäume).

Die Erfindung betrifft ein Verfahren zur kontinuierlichen Herstellung von Sandwichelementen enthaltend eine obere Deckschicht und eine untere Deckschicht und eine dazwischen liegende, mit den Deckschichten fest verbundene Schicht aus zelligem Reaktivkunststoff, bei dem
a) die beiden Deckschichten kontinuierlich in Längsrichtung gefördert werden, so dass zwischen den Deckschichten ein in Längsrichtung der Deckschichten ausgedehnter Spalt entsteht, und
b) das Reaktivgemisch auf die untere Deckschicht aufgetragen wird, und
c) anschließend die Deckschichten mit dem Reaktivgemisch in einer Formstrecke geführt werden, in der die Dicke des Sandwichelements eingestellt wird und in der das Reaktivgemisch ausreagiert, und
d) anschließend das ausreagierte Sandwichelement abgezogen wird,
   dadurch gekennzeichnet, dass
e) zwischen den Deckschichten mindestens ein sich über die Breite der Deckschichten erstreckendes Leitelement angeordnet ist, und das aufsteigende Reaktionsgemisch das mindestens eine Leitelement von unten berührt bevor es die obere Deckschicht erreicht.

Die Lösung für die beschriebene Aufgabenstellung besteht somit darin, dass der Prozess der Zellstrukturbildung mindestens zweistufig erfolgt, das heißt dass der aufsteigende Reaktivkunststoff mindestens eine durch ein Leitelement vertikal begrenzte Zwischenstufe von unten berühren und an seiner Unterseite entlang strömen muss, bevor er die obere Deckschicht berührt.

Dabei wird die Höhen- und Längs- sowie die Winkelposition des mindestens einen Leitelements bevorzugt so eingestellt, dass es zur Ausbildung einer deutlichen Bugwelle in der Schäumfront des Reaktivgemisches unterhalb des mindestens einen Leitelementes kommt, das heißt dass die aufsteigende Schäumfront des Reaktivgemisches zwischen der unteren Deckschicht und dem mindestens einen Leitelement über die Höhe eine in Transportrichtung der Deckschichten ausgebildete Ausbuchtung oder Aufwölbung aufweist. Diese Ausbuchtung oder Aufwölbung erstreckt sich dabei im Wesentlich quer über die gesamte Breite des aufschäumenden Reaktivgemisches.

Die Bugwelle, welche durch ihre Rotation die Luft zwischen den Unebenheiten oder Höckern des aufsteigenden Reaktivkunststoffs heraustransportiert und somit die Oberfläche egalisiert, entsteht nicht mehr wie bisher an der oberen Deckschicht wo der Reaktivkunststoff aushärtet und wo dann eine Zellstruktur mit chaotisch orientierten Zellen erhalten bleibt. Die Bugwelle entsteht jetzt vielmehr bereits vorher an dem mindestens einen Leitelement und zwar zu einem Zeitpunkt, zu dem das Reaktivgemisch einerseits noch cremig ist, andererseits aber die Zellstabilisierung schon so weit fortgeschritten ist, dass die Zeilen nicht mehr zerstört werden, wenn sie an dem Leitelement entlang strömen.

Anschließend verlässt das nun lunkerfreie, cremige Reaktivgemisch diese mindestens eine durch das Leitelement gebildete vertikale Zwischenstufe, wobei weiteres Treibgas entsteht bzw. das Treibgas weiter expandiert und die Zellen sich vergrößern. Die Steigrichtung ist nun im Wesentlichen senkrecht in Richtung auf das Oberband bzw. auf die obere Deckschicht.

Dieses zweite Steigen des Reaktivkunststoffs bewirkt nun, dass die auf der Höhe des mindestens einen Leitelements noch chaotisch liegenden Zellen sich entsprechend ihrer Steiglinien ausrichten, so dass Panels mit einer homogenen Zellstruktur entstehen. Dabei sind die länglichen, im Wesentlichen ovalen Zellen dann im Wesentlichen vertikal, das heißt senkrecht zu den Deckschichten des Sandwichelementes ausgerichtet.

Je nach Steigverhalten bzw. je nach Reaktivität des Reaktivkunststoffs sowie je nach Treibgasanteilen erreicht der aufsteigende und Zellen bildende Reaktivkunststoff die durch das mindestens eine Leitelement erzeugte vertikale Zwischenstufe bevorzugt innerhalb einer definierten Zeitspanne: Dabei ist der untere, das heißt früheste Zeitpunkt dadurch definiert, dass das aufsteigende Reaktivgemisch das doppelte Volumen des ursprünglich aufgetragenen Reaktivgemisches angenommen hat. Der obere, das heißt späteste Zeitpunkt ist dadurch definiert, dass sich das Reaktivgemisch der oberen Deckschicht bis auf eine vertikale Distanz angenähert hat, die der Höhe von 3 bis 5 vertikal ausgerichteten Zellen entspricht. Bei einer üblicherweise eingestellten Zellengröße im Bereich von 0,1 bis 1 mm entspricht das in etwa einer vertikalen Distanz von 0,3 - 5 mm. Zur praktischen Ermittlung des oberen Zeitpunkts kann die Höhe der vertikal ausgerichteten Zellen durch einfache Steigversuche ohne Leitelement ermittelt werden und die Distanz von 3 bis 5 Zellen daraus errechnet werden.

Bevorzugt ist der untere, das heißt früheste Zeitpunkt gegeben, wenn das aufsteigende Reaktivgemisch das 10-fache Volumen des ursprünglich aufgetragenen Reaktivgemisches angenommen hat. Besonders bevorzugt ist der untere Zeitpunkt gegeben, wenn das aufsteigende Reaktivgemisch das 25-fache Volumen des ursprünglich aufgetragenen Reaktivgemisches angenommen hat

Erreicht der aufsteigende, Zellen bildende Reaktivkunststoff das mindestens eine Leitelement nämlich zu früh, so ist das Reaktivgemisch noch nicht genügend cremig. Dann kann sich die erforderliche Rotation der Bugwelle nicht genügend ausbilden und die Eliminierung der eingeschlossenen Luft erfolgt nicht bzw. die Stabilisierung ist noch nicht genügend vorangeschritten, so dass Zellen durch Reibung zerstört werden, und es dann zur Bildung von Gasnestem kommt.

Erreicht der aufsteigende, Zellen bildende Reaktivkunststoff die mindestens eine Zwischenstufe zu spät, so bleibt nicht mehr genügend Zeit oder Weg zur vertikalen Ausrichtung der Zellen nach Beendigung des Kontakts des Reaktivgemisches mit dem Leitelement, so dass die Aushärtung des Reaktivkunststoffs bereits einsetzt und die Zellstruktur mit den chaotisch ausgerichteten Zellen erhalten bleibt.

Ist jedoch das mindestens eine Leitelement vertikal richtig positioniert, so wird durch die Rotation der Bugwelle die eingeschlossene Luft eliminiert ohne dass Zellen durch Reibung zerstört werden und die Zellen können sich beim abschließenden zweiten Steigen senkrecht zu den Deckschichten ausrichten. Solche Panels sind lunker- und verzugsfrei und haben eine sehr hohe Druckfestigkeit und eine sehr hohe Isolierwirkung.

Mit dem erfindungsgemäßen Verfahren sind sämtliche zelligen Reaktivkunststoffe herstellbar, langsam reaktive, vor allem aber auch hoch reaktive. Insbesondere ist das erfindungsgemäße Verfahren zur Herstellung von Sandwichelementen aus PUR- oder PIR-Schäumen geeignet.

In dem erfindungsgemäßen Verfahren werden bevorzugt 1 bis 5, besonders bevorzugt 1 bis 4, ganz besonders bevorzugt 1 bis 3, beispielsweise 2 Leitelemente eingesetzt.

In einer bevorzugten Ausgestaltung des erfindungsgemäßen Verfahrens sind die Leitelemente zur exakten Feinjustierung in ihrer vertikalen Position zwischen oberer und unterer Deckschicht (entsprechend Höhe H in Figur 3) verstellbar. Damit können die Leitelemente auf den Steighöhenverlauf und auf die Position, in der die Zellstabilisierung genügend ausgebildet ist, justiert werden. In einer bevorzugten Ausgestaltung sind die Leitelemente zur exakten Feinjustierung in ihrer horizontalen Position, das heißt in Transportrichtung der Deckschichten (entsprechend Länge L in Figur 3), verstellbar. Hiermit kann die Position der Leitelemente auf die Startzeit der Reaktivmischung eingestellt werden. In einer bevorzugten Ausführungsform kann das Leitelement gegen die Horizontale verdreht oder geneigt werden, wobei der Winkel gegenüber der Horizontalen bevorzugt sowohl positiv (α) als auch negativ (β) einstellbar ist, um den die Zellen ausrichtenden Stromlinien-Verlauf beeinflussen zu können.

In einer anderen bevorzugten Ausgestaltung des erfindungsgemäßen Verfahrens sind die Leitelemente durch Federelemente, die mechanisch, hydraulisch oder pneumatisch wirken können, schwimmend angeordnet, wobei die auf den aufsteigenden, zelligen Reaktivkunststoff wirkende Federkräfte auch einstellbar sein können.

Auch eine Temperierung der Leitelemente ist möglich. Dabei ist besonders eine Kühlung des untersten Leitelements sinnvoll, um den Reaktionsprozess in dieser Phase zu beeinflussen, um beispielsweise für das Entweichen der Luft Zeit zu gewinnen oder den Zeitpunkt der Verfestigung zu verschieben.

In einer weiteren Ausgestaltung des Verfahrens wird die Bugwelle der Schäumfront unterhalb des Leitelements mit Heißluft angeblasen (Figur 3). Diese Maßnahme dient dazu, dass an der Bugwelle austretende Luftblasen zerstört werden und somit nicht wieder in die Bugwelle gelangen können.

Als Leitelemente sind geeignet beispielsweise ebene oder gebogene Plattenelemente, Umlenkwalzen oder -kufen (beispielsweise für die obere Deckschicht) oder Plattenelemente die aus einstellbaren Segmenten bestehen.

Es ist auch möglich, das oder die Leitelemente in ihrer gesamten Erstreckung in Transportrichtung konvex, konkav oder eben auszubilden oder nur in Teilabschnitten konvex, konkav oder eben zu gestalten und damit sich dem Expansionsverhalten der Reaktivmischung anzupassen und gezielt die Stromlinienausbildung zu steuern.

Die Erfindung betrifft auch eine Vorrichtung zur kontinuierlichen Herstellung von Sandwichelementen enthaltend eine obere Deckschicht, eine untere Deckschicht und eine dazwischen liegende, mit den Deckschichten fest verbundene Schicht aus zelligem Reaktivkunststoff, umfassend ein umlaufendes Oberband zur Führung der oberen Deckschicht, ein umlaufendes Unterband zur Führung der unteren Deckschicht, eine Zuführeinrichtung für die obere Deckschicht, eine Zuführeinrichtung für die untere Deckschicht, eine Ablängeinrichtung für die Sandwichelemente, einen Mischkopf zum Auftragen des Reaktivgemisches auf die untere Deckschicht, eine Dosiereinrichtung zur Dosierung der Reaktivkomponenten sowie Leitungen zwischen der Dosiereinrichtung und dem Mischkopf, dadurch gekennzeichnet, dass zwischen der oberen Deckschicht und der unteren Deckschicht mindestens ein sich über die Breite der Deckschichten erstreckendes Leitelement angeordnet ist.

Dabei ist das mindestens eine Leitelement bevorzugt so zwischen den Deckschichten angeordnet, dass das aufsteigende Reaktivgemisch das mindestens eine Leitelement frühestens dann erreicht, wenn sich das Volumen des in Schritt b) aufgetragenen Reaktivgemisches mindestens verdoppelt hat, und das mindestens eine Leitelement spätestens dann erreicht, wenn sich das Reaktivgemisch der oberen Deckschicht bis auf eine vertikale Distanz angenähert hat, die der Höhe von 3 bis 5 vertikal ausgerichteten Zellen entspricht.

Die Erfindung wird nachstehend anhand der folgenden Abbildungen näher erläutert. Es zeigen
- Fig. 1: eine Vorrichtung zur Herstellung von Sandwichelementen aus zelligem Reaktivkunststoff nach dem Stand der Technik.
- Fig. 2: Steigverläufe nach dem Stand der Technik von zelligem Reaktivkunststoff für drei verschiedene Produktionsgeschwindigkeiten.
- Fig. 3: eine erfindungsgemäße Vorrichtung zur Herstellung von Sandwichelementen aus zelligem Reaktivkunststoff, bei der zwischen oberer und unterer Deckschicht drei Zwischenstufen angeordnet sind.

Figur 1 zeigt eine Vorrichtung zur Herstellung von Sandwichelementen 1 aus zelligem Reaktivkunststoff nach dem Stand der Technik. Dabei werden eine untere Deckschicht 2 und eine obere Deckschicht 3 kontinuierlich durch entsprechende, zugeordnete Zufiihreinrichtungen 4 und 5 in den in Längsrichtung ausgedehnten Spalt zwischen dem umlaufenden Oberband 7 und dem umlaufenden Unterband 6, der so genannten Formstrecke, gefördert und darin geführt.

Die Polyolkomponente A und die Isocyanatkomponente B werden aus den jeweils zugeordneten Arbeitsbehältern 8 und 9 über zugeordnete Pumpen 22, 23 und Leitungen 24, 25 zum Mischkopf 10 dosierend gefördert, dort vermischt und das dabei entstehende Reaktionsgemisch 21 auf die untere Deckschicht 2 aufgebracht, wobei der Mischkopf 10 quer zur Transportrichtung über der Breite der unteren Deckschicht 2 traversiert.

Das auf der unteren Deckschicht 2 aufgebrachte Reaktionsgemisch 21 schäumt auf und wird durch die Längsbewegung der unteren Deckschicht 2 in die Formstrecke transportiert, die von dem umlaufenden Oberband 7 und dem umlaufenden Unterband 6 bzw. den Deckschichten 3, 2 aufgespannt wird.

In der Formstrecke reagiert das Reaktionsgemisch zwischen der oberen Deckschicht 3 und der unteren Deckschicht 2 zur Zwischenschicht 20 aus zelligen Reaktivkunststoff aus, so dass nach Durchlaufen der Formstrecke ein zelliges Sandwichelement 1 erhalten wird, das anschließend in der Ablängeinrichtung 11, beispielsweise einer Säge, abgelängt und weiterbearbeitet werden kann.

Figur 2 zeigt Steigverläufe von zelligem Reaktivkunststoff nach dem Stand der Technik für drei verschiedene Produktionsgeschwindigkeiten.

Zwischen Oberband 7 und Unterband 6 bzw. den dazugehörigen Deckschichten 3 und 2 wird durch Mischkopf 10 flüssiges Reaktivgemisch 21 aufgetragen, welches aufschäumt und anschließend ausreagiert, so dass zellige Panels entstehen.

Abhängig von der Produktionsgeschwindigkeit und der Reaktivität, die wiederum von den Rohstoff- und Umgebungstemperaturen beeinflusst werden, ergeben sich nun unterschiedliche Steigkurven. Steigkurve a zeigt ein Beispiel einer hohen Produktionsgeschwindigkeit, d.h. Transportgeschwindigkeit der Deckschichten bzw. Panels. Die Steigkurve a führt jedoch zur Bildung von Lunkern.

Bei Steigkurve b ist die Transportgeschwindigkeit zu niedrig. Hierbei werden zwar Lunker vermieden, aber eine solche Steigkurve führt zu starken Überwälzungen und damit zu einer Zellstruktur mit chaotisch angeordneten Zellen, und damit zu Panels minderer Qualität, d.h. zur Panels mit reduzierter Druckfestigkeit und verminderter Isolierwirkung

Steigkurve c entspricht dem bisherigen Praxiskompromiss bei der Produktionsgeschwindigkeit. Hierbei ist einerseits die Lunkergröße und die Lunkerhäufigkeit minimiert, und andererseits auch die Dicke der Überwälzungsschicht, d.h. die Dicke der Panelrandschicht, in der die Zellen chaotisch liegen. Übliche Produktionsgeschwindigkeiten liegen, abhängig vom Anlagentyp (d.h. Baulänge und damit Aushärtezeit) und Reaktivität, zwischen 8 und 60 m/min. Die Geschwindigkeitsspanne zwischen Steigkurve a und b beträgt üblicherweise zwischen 0,5 und 5 % der Produktionsgeschwindigkeit für übliche Polyurethan-Systeme. Bei Polyisocyanurat-Systemen kann der Spielraum auch deutlich unter 0,5 % liegen, was das sichere Einstellen eines Praxiskompromisses wesentlich erschwert oder gar unmöglich macht.

Figur 3 zeigt eine Vorrichtung des erfindungsgemäßen Verfahrens mit vier Stufen, d.h. mit drei vertikalen Zwischenstufen, die durch die drei Leitelemente 12, 13, 14 nach oben begrenzt werden, und der obersten Stufe, die durch die obere Deckschicht 3 nach oben begrenzt wird.

Nachdem das flüssige Reaktivgemisch 21 auf die untere Deckschicht 2 aufgetragen worden ist, beginnt die Treibreaktion und damit die Zellbildung, so dass das Reaktivgemisch aufsteigt.

In der ersten vertikalen Zwischenstufe, die durch das unterste Leitelement 12 nach oben begrenzt ist, wird eine Schäumfront mit einer Bugwelle erzeugt, durch deren Rotation Lunker eliminiert werden. Die weiteren vertikalen Zwischenstufen, die durch die Leitelemente 13, 14 nach oben begrenzt sind, dienen als Zellorientierungsstufen. Darin richten sich die Zellen, die nach Passieren des untersten Leitelements 12 noch völlig chaotisch liegen, in Stromlinien-Richtung aus. Nach dem Passieren des obersten Leitelements 14 laufen die Stromlinien mit den ausgerichteten Zellen senkrecht zur Endstufe, der oberen Deckschicht 3, wo die Aushärtung erfolgt.

Wichtig bei dem gesamten Prozess ist, dass das Reaktivgemisch genügend cremig ist, d.h. dass das Volumen des Reaktivgemischs sich deutlich vergrößert hat bevor es das unterste Leitelement 12 erreicht und dass das unterste Leitelement 12 bezüglich Höhen-, Längs- und Winkelposition so angeordnet ist, dass sich die erforderliche Bugwelle ausbilden kann. Des weiteren muss das Reaktivgemisch so weit stabilisiert sein, dass keine Zellen durch Reibung zerstört werden. Die weiteren optionalen Leitelemente 13 und 14 werden in ihrer jeweiligen Höhen-, Längs- und Winkelposition dem ersten Leitelement 12 so nachgeordnet, dass sich keine Bugwelle mehr ausbilden kann und die Zellen sich in Richtung der Stromlinien ausrichten können. Wichtig ist ebenfalls, dass das oberste Leitelement 14 in einem Bereich positioniert ist, in welchem das Reaktivgemisch 21 immer noch völlig cremig ist, damit genügend Steigweg für die vertikale Ausrichtung der Zellen verbleibt, so dass keine vorzeitige Verfestigung der Zellstruktur erfolgt.

Die Leitelemente 12, 13, 14 sind jeweils in Gelenkverbindungen 15, 16, 17 aufgehangen, so dass sie mittels Verstelleinrichtungen (nicht dargestellt) in ihrer Winkelposition verändert werden können. Dabei können positive Winkelposition α₁, α₂ sowie α₃, aber auch negative Winkelpositionen β₁, β₂ sowie β₃ gegen die Horizontale eingestellt werden.

Die Höhenpositionen H₁ und H₂ sowie H₃ und die Längspositionen L₁, L₂ sowie L₃ sind ebenfalls mittels Verstelleinrichtungen (nicht dargestellt) einrichtbar.

Vom Gebläse 18 wird Heißluft aus einem Heißluftreservoir (nicht dargestellt) mittels Düsen 19 auf die Bugwelle gestrahlt. Auf diese Weise wird das Aufplatzen von im cremigen Reaktivgemisch eingeschlossenen Luftnestern erreicht.

## Patentansprüche

1. Verfahren zur kontinuierlichen Herstellung von Sandwichelementen (1) enthaltend eine obere Deckschicht (3) und eine untere Deckschicht (2) und eine dazwischen liegende, mit den Deckschichten fest verbundene Schicht (20) aus zelligem Reaktivkunststoff, bei dem
a) die beiden Deckschichten (2, 3) kontinuierlich in Längsrichtung gefördert werden, so dass zwischen den Deckschichten ein in Längsrichtung der Deckschichten ausgedehnter Spalt entsteht, und
b) das Reaktivgemisch (21) auf die untere Deckschicht (2) aufgetragen wird, und
c) anschließend die Deckschichten (2, 3) mit dem Reaktivgemisch (21) in einer Formstrecke geführt werden, in der die Dicke des Sandwichelements eingestellt wird und in der das Reaktivgemisch ausreagiert, und
d) anschließend das ausreagierte Sandwichelement (1) abgezogen wird,
**dadurch gekennzeichnet, dass**
e) zwischen den Deckschichten (2, 3) mindestens ein sich über die Breite der Deckschichten erstreckendes Leitelement (12, 13, 14) angeordnet ist, und das aufsteigende Reaktivgemisch (21) das mindestens eine Leitelement von unten berührt bevor es die obere Deckschicht erreicht.

2. Verfahren nach Anspruch 1, **dadurch gekennzeichnet, dass** das mindestens eine Leitelement (12, 13, 14) so zwischen den Deckschichten (2, 3) angeordnet wird, dass das aufsteigende Reaktivgemisch (21) das mindestens eine Leitelement (12, 13, 14) frühestens dann erreicht, wenn sich das Volumen des in Schritt b) aufgetragenen Reaktivgemisches mindestens verdoppelt hat und das mindestens eine Leitelement (12, 13, 14) spätestens dann erreicht, wenn sich das Reaktivgemisch der oberen Deckschicht (3) bis auf eine vertikale Distanz angenähert hat, die der Höhe von 3 bis 5 vertikal ausgerichteten Zellen entspricht.

3. Verfahren nach einem der Ansprüche 1 oder 2, **dadurch gekennzeichnet, dass** das mindestens eine Leitelement (12, 13, 14) so zwischen den Deckschichten (2, 3) angeordnet wird, dass die aufsteigende Schäumfront des Reaktivgemisches zwischen der unteren Deckschicht (2) und dem mindestens einen Leitelement (12, 13, 14) über die Höhe eine in Transportrichtung der Deckschichten (2, 3) ausgebildete Ausbuchtung oder Aufwölbung aufweist.

4. Verfahren nach einem der Ansprüche 1 bis 3, **dadurch gekennzeichnet, dass** das mindestens eine Leitelement (12, 13, 14) in vertikaler Richtung verstellbar ist.

5. Verfahren nach einem der Ansprüche 1 bis 4, **dadurch gekennzeichnet, dass** das mindestens eine Leitelement (12, 13, 14) in Transportrichtung der Deckschichten (2, 3) verstellbar ist.

6. Verfahren nach einem der Ansprüche 1 bis 5, **dadurch gekennzeichnet, dass** das mindestens eine Leitelement (12, 13, 14) gegen die Horizontale geneigt werden kann und der Winkel gegen die Horizontale einstellbar ist.

7. Verfahren nach einem der Ansprüche 1 bis 6, **dadurch gekennzeichnet, dass** die durch das mindestens eine Leitelement (12, 13, 14) auf das aufsteigende Reaktivgemisch (21) ausgeübte Kraft verstellbar ist.

8. Verfahren nach einem der Ansprüche 1 bis 7, **dadurch gekennzeichnet, dass** das Reaktivgemisch (21) unterhalb des mindestens einen Leitelements (12, 13, 14) mit einem heißen Gas angeblasen wird.

9. Vorrichtung zur kontinuierlichen Herstellung von Sandwichelementen (1) enthaltend eine obere Deckschicht (3), eine untere Deckschicht (2) und eine dazwischen liegende, mit den Deckschichten fest verbundene Schicht (20) aus zelligem Reaktivkunststoff, umfassend ein umlaufendes Oberband (7) zur Führung der oberen Deckschicht (3), ein umlaufendes Unterband (6) zur Führung der unteren Deckschicht (2), eine Zuführeinrichtung (5) für die obere Deckschicht (3), eine Zuführeinrichtung (4) für die untere Deckschicht (2), eine Ablängeinrichtung (11) für die Sandwichelemente, einen Mischkopf (10) zum Auftragen des Reaktivgemisches (21) auf die untere Deckschicht (2), Dosiereinrichtung (22, 23) zur Dosierung der Reaktivkomponenten sowie Leitungen (24, 25) zwischen den Dosiereinrichtung und dem Mischkopf (10), **dadurch gekennzeichnet, dass** zwischen der oberen Deckschicht (3) und der unteren Deckschicht (2) mindestens ein sich über die Breite der Deckschichten erstreckendes Leitelement (12, 13, 14) angeordnet ist.

10. Vorrichtung nach Anspruch 9, **dadurch gekennzeichnet, dass** das mindestens eine Leitelement (12, 13, 14) zwischen den Deckschichten (2, 3) vertikal so positioniert ist, dass das aufsteigende Reaktivgemisch (21) das mindestens eine Leitelement (12, 13, 14) frühestens dann erreicht, wenn sich das Volumen des in Schritt b) aufgetragenen Reaktivgemisches mindestens verdoppelt hat, und das mindestens eine Leitelement (12, 13, 14) spätestens dann erreicht, wenn sich das Reaktivgemisch der oberen Deckschicht (3) bis auf eine vertikale Distanz angenähert hat, die der Höhe von 3 bis 5 vertikal ausgerichteten Zellen entspricht.

11. Vorrichtung nach einem der Ansprüche 9 oder 10, **dadurch gekennzeichnet, dass** das mindestens eine Leitelement (12, 13, 14) in vertikaler Richtung verstellbar ist.

12. Vorrichtung nach einem der Ansprüche 9 bis 11, **dadurch gekennzeichnet, dass** das mindestens eine Leitelement (12, 13, 14) in Transportrichtung der Deckschichten (2, 3) verstellbar ist.

13. Vorrichtung nach einem der Ansprüche 9 bis 12, **dadurch gekennzeichnet, dass** das mindestens eine Leitelement (12, 13, 14) gegen die Horizontale geneigt werden kann und der Winkel gegen die Horizontale einstellbar ist.

14. Vorrichtung nach einem der Ansprüche 9 bis 13, **dadurch gekennzeichnet, dass** das mindestens eine Leitelement (12, 13, 14) mit mechanisch oder hydraulisch oder pneumatisch wirkenden Federelementen abgestützt ist.

15. Vorrichtung nach Anspruch 14, **dadurch gekennzeichnet, dass** die Federkraft der Federelemente verstellbar ist.

16. Vorrichtung nach einem der Ansprüche 9 bis 15, **dadurch gekennzeichnet, dass** unterhalb des mindestens einen Leitelements (12, 13, 14) eine Vorrichtung (19) zur Zufuhr heißer Gase angeordnet ist, die Kanäle mit Düsen oder Schlitzen für die Zufuhr heißer Gase enthält.

17. Vorrichtung nach einem der Ansprüche 9 bis 16, **dadurch gekennzeichnet, dass** das mindestens eine Leitelement (12, 13, 14) in seiner gesamten Erstreckung in Transportrichtung oder nur in Teilabschnitten eben, konvex oder konkav ausgebildet ist.

18. Vorrichtung nach einem der Ansprüche 9 bis 16, **dadurch gekennzeichnet, dass** das mindestens eine Leitelement (12, 13, 14) eine Umlenkwalze für die obere Deckschicht (3) enthält.
